# EUROPEAN PATENT SPECIFICATION

(11) **EP 4 111 821 B1**
(45) Date of publication and mention of the grant of the patent: **08.04.2026**
(21) Application number: 21712901.4
(22) Date of filing: 26.02.2021
(51) Int. Cl.: B22D 19/00, F24H 1/00, F24H 1/10, F24H 9/1818, H01M 10/663, H05B 3/26, F24H 1/20, H05B 3/44, H01M 10/625

(54) **THERMAL ADJUSTMENT SYSTEM**
THERMISCHES EINSTELLSYSTEM
SYSTÈME DE RÉGLAGE THERMIQUE

(30) Priority: 28.02.2020 IT 202000004258
(43) Date of publication of application: 04.01.2023
(73) Proprietor: Eldor Corporation S.p.A., 22030 Orsenigo (Como) (IT)
(72) Inventor: FORTE, Pasquale, 22030 Orsenigo (Como) (IT); FORTE, Luca, 22030 Orsenigo (Como) (IT); MARIGLIANO, Fabio, 22030 Orsenigo (Como) (IT)
(74) Representative: Zermani Biondi Orsi, Umberto
(86) International application number: PCT/IB2021/051620
(87) International publication number: WO 2021/171245

(56) References cited:
- EP-A1- 3 088 230
- EP-A1- 3 477 764
- US-A1- 2012 295 141
- US-B2- 9 899 712

## Description

The present invention relates to the technical sector of heat exchangers.

In particular, the present invention relates to a thermal adjustment system, which is particularly adapted and configured to be used in an electric traction unit.

The present invention finds particular application in the automotive industry, i.e. the inventive concepts described herein are particularly adapted to be implemented in the design and manufacturing of vehicles, especially endothermic-electric hybrid or electric propulsion vehicles.

In relation to such sector, the need has long been felt to extend the field of electric motor efficiency with the aim of allowing the same to be used also in the absence of a mechanical drive, or nonetheless in the presence of a simplified mechanical drive.

A particularly important role is covered by thermal exchange systems, which ensure that the various components of the vehicle, in particular, the electric motor, can operate in optimum conditions so as to increase the efficiency thereof.

For such reason, manufacturers are currently studying different types of thermal exchange systems, in particular heaters, which allow the control of the temperature of the components, principally requiring the temperature thereof to be kept within an optimum working range, such as the battery or the electronics related thereto.

To date, some of the most widely used systems comprise a heating device provided with a metal support to which a resistor is bound, which is obtained by screen printing of the conductive tracks on a plate made of a ceramic material (electrically insulating, but thermally conductive). An example of a system for maintaining an electric vehicle battery within a desired temperature operating range is known from US2012/295141 A1.

Such resistors are placed in contact with a heat-transfer liquid to heat it dissipating electric power by Joule effect, thereby controlling the temperature of the components of the electric traction system, which are placed in contact with a circuit, inside which, as said, the heat-transfer fluid flows.

However, until now, the coupling of the resistors to the support is a particularly complex and cumbersome procedure.

Furthermore, the known heating devices are often fragile and easily subject to breakage, especially at the coupling portion between the support and the resistors.

Therefore, the need is strongly felt in this sector to develop new methods, which allow heating devices to be produced more efficiently with elevated quality and durability.

Furthermore, in order to improve the overall efficiency of the traction units, having improved management of the spaces and arrangement of the individual components, aimed at optimising the volumes by reducing weight and costs of the finished products.

In this context, the technical task underlying the present invention is to propose a thermal adjustment system, which overcomes at least some of the drawbacks of the prior art stated above.

In particular, it is the object of the present invention to provide a thermal adjustment system, which is reliable, efficient and compact.

The stated technical task and specified objects are substantially reached by a thermal adjustment system comprising the technical features presented in one or more of the accompanying claims.

A method, not belonging to the present invention, is shown for manufacturing a thermal adjustment system for at least two components of a hybrid/electric traction unit, comprising an adjustment circuit provided with a first section adapted to be placed in contact or adjacent to a first component of the traction unit and a second section adapted to be placed in contact or adjacent to a second component of the unit.

A heat-transfer fluid flows inside the adjustment circuit.

The system further comprises a heating device coupled to the second section of the adjustment circuit in direct contact with the heat-transfer fluid and a control unit operatively associated with the device and configured to modify an electric power supplied to the at least one resistor so as to modify the temperature of the heat-transfer fluid at the second section.

In further detail, the heating device comprises a plate and at least one resistor, wherein said plate defines a wall of said adjustment circuit.

The tubular or cartridge resistor has a central body interposed between two folded portions, which are connected to the central body by means of corresponding knee points, which have corresponding ends.

The folded portions are bound to the plate, crossing the same, so as to face the corresponding ends at a first face thereof and distance the corresponding knee points from the second face by a distance, preferably ranging between 1 mm to 10 mm.

In particular, the plate can be made by co-moulding on the folded portions of the resistor.

The dependent claims, incorporated herein for reference, correspond to different embodiments of the invention.

Further features and advantages of the present invention will become more apparent from the indicative and therefore non-limiting description of a preferred, but non-exclusive embodiment of a method for manufacturing a heating device, as shown in the accompanying drawings, wherein:

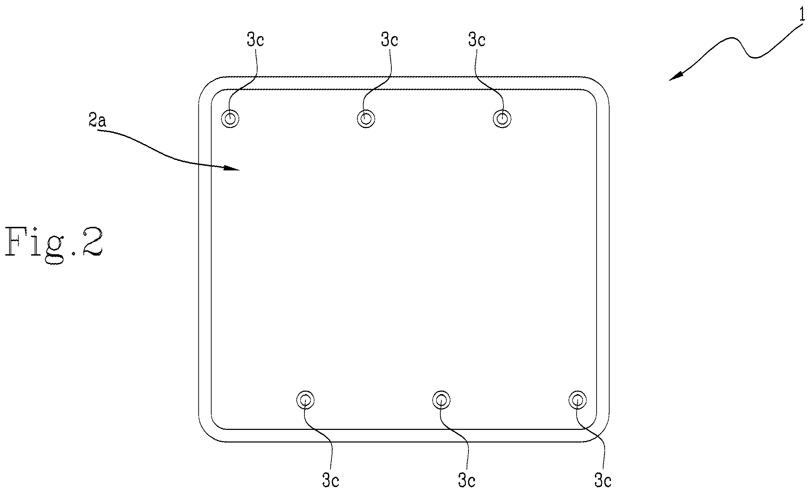

- figures 1 and 2 show corresponding opposite faces of a heating device according to the present invention.

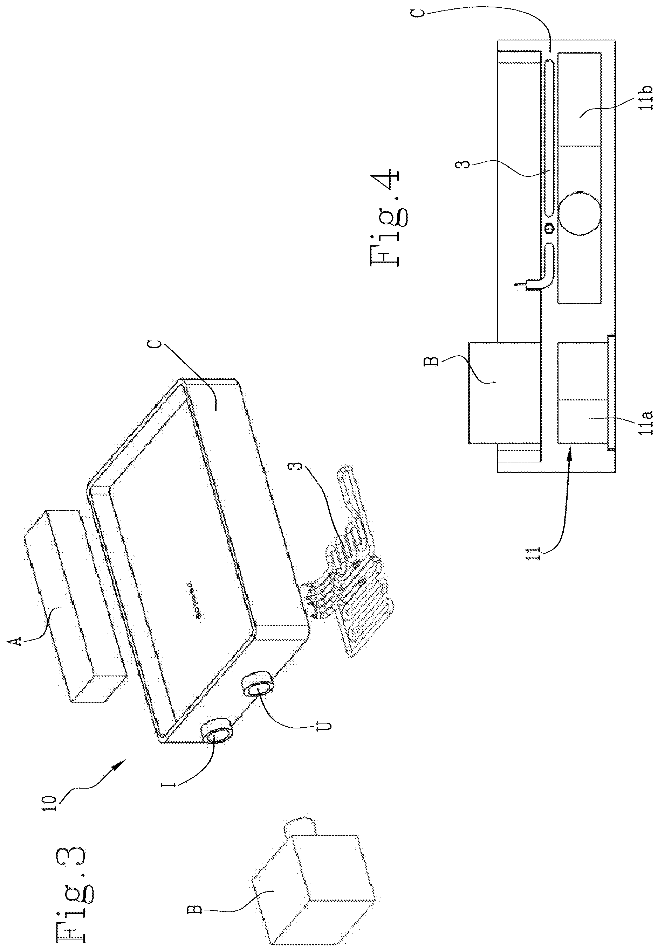

- figure 3 shows an exploded view, which allows the main components of the system described herein to be clearly identified;
- whereas figure 4 shows a sectional view of the system in figure 3.

In the accompanying figures, a heating device is generally identified with reference numeral 1 belonging to a thermal adjustment system 10, to which reference will be made below in the present description simply as device 1.

Structurally, the device 1 comprises a plate 2 and at least one resistor 3.

In particular, the plate 2 has a first face 2a and a second face 2b, which are opposite each other and made of a metal material, such as, for example, aluminium or an aluminium alloy.

Dimensionally, the plate 2 has a thickness ranging between 1 millimetre and 6 millimetres, preferably between 2 and 4 millimetres, more preferably equal to 3 millimetres or more.

Whereas, the resistor 3 is of the tubular or cartridge type, i.e. it is made from a tubular body of a heat-conducting metal material, preferably steel) inside which a helical metal filament extends (preferably made of nickel-chrome) buried in a ceramic insulation (preferably magnesium oxide); the ceramic insulation has the dual role of maintaining the position of the filament and electrically insulating it with respect to the tubular body. Preferably, the resistor 3 has an overall diameter ranging between 4 millimetres and 8 millimetres, preferably between 6 millimetres and 7 millimetres.

Furthermore, the resistor 3 is shaped so as to have a central body 3a extending between two folded portions 3b having corresponding ends, at which the resistor 3 comprises corresponding electrical connection terminals 3c.

In particular, each folded portion 3b extends between a knee point, which connects the folded portion 3b to the central body 3a, and the corresponding end.

The folded portions 3b are inserted through the plate 2, preferably orthogonally thereto.

Such folded portions have an axial extension, which is such that the corresponding ends project outside the first face 2a and the corresponding knee points are distanced from the second face 2b, preferably by a distance ranging between 1 mm and 10 mm.

In other words, the folded portions 3b are inserted into the plate 2 and project therefrom so that the ends thereof are all arranged at the same face (in particular, the first face 2a), while the knee points, and therefore the central body 3a, remain completely arranged on the opposite side of the plate 2 (thus at the second face 2b).

Thus, the central body 3a is distanced from the plate 2, so that in a condition of use, the entire surface of the resistor 3 can come into contact with a heat-transfer fluid after maximising the surface of thermal exchange between the two.

Alternatively, the central body 3a can be buried inside the plate. According to an aspect of the present invention, the central body 3a has a main extension axis parallel to the plate.

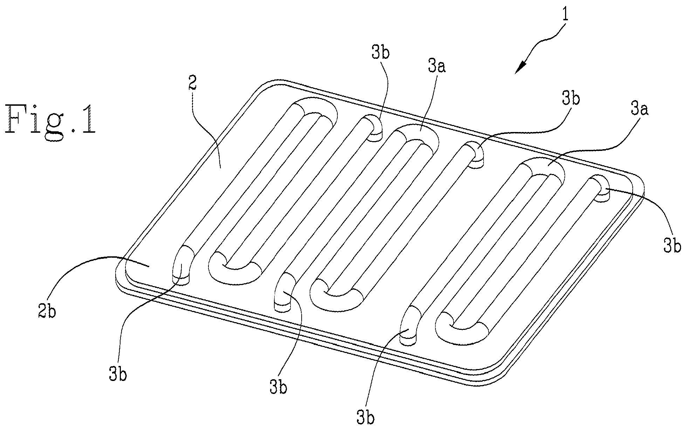

In particular, as is shown by way of example in Fig. 1, the central body 3a is serpentine-shaped and lies on a plane parallel to the plate 2.

In other words, each branch of the serpentine is coplanar to the adjacent branch, on a plane parallel to the plate (in particular, to the second face 2b).

Thereby, the use of the spaces is optimised by minimising the volume generated by the resistor 3.

To further improve the thermal exchange capacity thereof, the device 1 can comprise a plurality of resistors 3 (precisely three in the accompanying figures), which are arranged so as to uniformly cover the surface of the plate 2 to fully exploit all of the space available.

Operatively, the coupling of the plate 2 to the resistors 3 is obtained by co-moulding the plate 2 on the folded portions 3b, which will be discussed in greater detail below.

Thereby, advantageously, the folded portions 3b (and therefore the resistors 3 as a whole) are bound

Alternatively, the plate 2 can be coupled to the at least one resistor 3 by mechanical coupling means or by gluing.

The device 1 can further comprise a terminal block, which is advantageously coupled to the first face 2a of the plate, so as to be arranged at the terminals 3c in order to be able to be connected thereto.

In particular, electrical connection elements, preferably filiform connection elements, branch off from the terminal block, allowing the resistors 3 to be driven.

Advantageously, the heating device 1 is particularly resistant and capable of optimising the thermal exchange.

In further detail, the device 1 can be made according to the method described in depth below.

Such method is carried out by providing a mould comprising a plate-shaped moulding chamber.

In particular, the mould has two concave half-moulds, which can be coupled to each other to define said chamber.

Preferably, the chamber is delimited by two flat walls (preferably parallel to each other) and a side wall (or belt).

Such mould is used for making the plate 2 of the device 1.

In order to be able to allow the coupling to the resistors 3, the mould has at least one pair of insertion seats, each of which is defined by a pair of coaxial holes, which are arranged on corresponding flat walls of the chamber.

Then, at least one resistor 3 of the tubular or cartridge type is provided having a central body 3a extending between folded portions 3b having corresponding ends.

The resistor 3 is coupled to the mould by inserting each end thereof into a corresponding pair of insertion seats, crossing the chamber.

In other words, each folded portion 3b is positioned so as to be inserted into both holes of the pair and cross the chamber from one flat wall to the other.

In particular, following the positioning, the folded portions cross both of the flat walls of the chamber so that both the knee points and the ends are placed outside the moulding chamber.

More specifically, the ends cross one same flat wall of the chamber and the knee points project outside the other.

Preferably, the resistor 3 is coupled to the mould so that only the electrical connection terminals 3c project at one same flat wall.

In particular, the terminals 3c (or more generally the ends of the folded portions 3b) can also project from the mould or be outside the moulding chamber but arranged inside the flat wall, i.e. inserted therein.

Preferably, the mould comprises a plurality of pairs of insertion seats and the step of coupling at least one resistor is performed by coupling a plurality of resistors to corresponding pairs of insertion seats.

It is thereby possible to obtain a device 1 provided with several resistors 3 (as can be seen in the accompanying figures).

Finally, a metal material, for example, aluminium or an alloy thereof, is injected inside the moulding chamber.

In this regard, note that the metal material with which the tubular body of the resistor is made must be high-melting with respect to the metal material injected into the moulding chamber. More preferably, the difference between the two softening and/or fusion points must be greater than 250°C, preferably at least 400°C.

Thus, a plate 2 is co-moulded on the folded portions 3b of the at least one resistor 3.

In other words, by means of such co-moulding process, the plate 2 is in fact moulded about the folded portions 3b of the resistors 3, incorporating them therein and thus defining a particularly stable and lasting coupling portion.

Alternatively, the plate 2 can be coupled to the at least one resistor 3 by mechanical coupling means or by gluing.

Once the plate 2 has been made, it is possible to apply a terminal block thereto, which can then be electrically connected to the terminals 3c. Advantageously, the method described herein allows a heating device to be made, in which the resistors 3 are coupled to the plate 2, which acts as a support directly during the formation thereof, thus allowing the production process to be simplified as it is no longer necessary to perform a complex welding step on the previously formed plate.

As discussed above, independently of the specific realisation method thereof, the device 1 is one of the main components of the thermal adjustment system 10.

Such system is particularly designed and adapted to be installed and operate on an electric traction unit.

From a structural point of view, the system 10 described herein, comprises, in addition to the device 1, an adjustment circuit 11, a heat-transfer fluid, and a control unit.

The adjustment circuit 11 is placed in contact or adjacent to at least one component of the electric traction unit.

In particular, the adjustment circuit 11 has a first section 11a, which can be placed in a condition of thermal exchange (in contact or adjacent) with a first component A of the electric traction unit, preferably a power electronics and a second section 11b.

The heat-transfer fluid flows inside the adjustment circuit 11 and can preferably comprise a mixture of water and glycol.

In further detail, the first section 11a is arranged upstream of the second section 11b with respect to a flow direction of the heat-transfer fluid inside the adjustment circuit 11.

The device 1 is coupled to the second section 11b of the adjustment circuit 11, with the resistor 3 placed in thermal contact with said heat-transfer fluid.

For example, the central bodies 3a of each resistor 3 can be placed in direct contact with the heat-transfer fluid if the device 1 is made with resistors 3 having the central portion 3a thereof distanced from the plate 2. The control unit is operatively associated with the device 1 and is configured to modify an electric power supplied to the device 1, in particular, to the at least one resistor 3, so as to modify a temperature of the heat-transfer fluid.

In other words, the control unit acts on the device 1 varying the power supply of the resistors 3, modifying the amount of heat dissipated by Joule effect.

Thus, it is possible to control the temperature of the heat-transfer fluid flowing inside the second section 11b and, therefore the second component B of the electric traction unit with which the second section 11b of the adjustment circuit 11 interacts.

In particular, the control unit modifies the electric power supplied to the heating device 1 as a function of a temperature of reference, which preferably comprises, or coincides with the temperature of a second component B of the electric traction unit, preferably a battery pack. Optionally, the system 10 can comprise the first component A and/or the second component B.

According to a particular aspect of the present invention, the system 10 also comprises a box-like body C delimited by a plurality of walls defining corresponding chambers inside which the various components constituting the system 10 can be housed/slide.

In further detail, the second section 11b extends in a channel the walls of which are at least partially defined by the device 1 (in particular, the plate 2 can define such wall) so that the ends of the folded portions 3b are arranged outside thereof.

In other words, the plate 2 contributes to delimiting the adjustment circuit 11 and has the first face 2a thereof facing outside and the second face 2b facing inside the box-like body C.

According to a particular aspect of the present invention, the plate 2 is made in a single piece with the box-like body.

In particular, according to a particular aspect of the present invention, the entire box-like body is made by means of a single moulding process and, in particular, the entire box-like body is co-moulded on the at least one resistor 3 belonging to the device 1.

Alternatively, the box-like body C has a housing adapted to receive, on insertion, the at least one resistance 3 and the plate 2 can define a cover for such housing.

In order to allow the vector fluid to enter and circulate in the system 10, the box-like body C has an input opening I, which allows the heat-transfer fluid to be introduced into the first section 11a and an output opening U, which allows the heat-transfer fluid to exit the box-like body C.

According to a possible aspect, the output opening U is coupled or can be coupled to the second component B, so that the second section 11b of the adjustment circuit 11 is placed in fluid communication with the second component B, thus allowing the heat-transfer fluid to come into contact with such second component B immediately downstream of the interaction thereof with the device 1 and after exiting the box-like body C.

Again according to such aspect, the second component B can comprise an auxiliary circuit, for example, configured to receive the heat-transfer fluid from the output opening U.

Operatively, the box-like body C has such a conformation whereby the heat-transfer fluid flowing inside the first section 11a is capable of exchanging heat only with the first component A (which may nonetheless be coupled to the box-like body C so as to be in thermal contact both with the first section 11a and with the second section 11b).

Similarly, the thermoregulator fluid is placed in thermal contact with the second component B only after entering the second section 11b, in particular, after interacting with the device 1.

Advantageously, the system of the present invention overcomes the drawbacks stated in the prior art and allows the operation of the electric motors to be considerably optimised by means of a particularly stable and efficient heating device The scope of protection of the current invention is defined by the appended claims. 1.

## Claims

1. A thermal adjustment system for an electric motor comprising:
an adjustment circuit (11) having a first section (11a) and a second section (11b);
- a heat-transfer fluid flowing in said adjustment circuit;
- a heating device (1) coupled to the second section (11b) of the adjustment circuit (11) so as to heat the heat-transfer fluid, in use, flowing in said second section (11b); and comprising:
- a plate (2) having a first face (2a) and a second face (2b), which are opposite;
- at least one tubular or cartridge resistor (3) having a central body (3a) extending between two folded portions (3b), which are connected to the central body (3a) by means of corresponding knee points, having corresponding ends; said folded portions (3b) being inserted through the plate (2) so as to face the corresponding ends at the first face (2a);
- a first component (A) defining a power electronics of an electric traction unit and placed in a condition of thermal exchange with the first section (11a);
- a second component (B), comprising at least one battery pack of the electric traction unit, being placed in fluid communication with the second section (11b) so as to be able to receive the heat-transfer fluid from said second section (11b);
- a control unit operatively associated with the heating device and configured to modify an electric power supplied to the at least one resistor (3) so as to modify a temperature of said heat-transfer fluid at the second section (11b);
- a box-like body (C) delimited by a plurality of walls, wherein said adjustment circuit (11) is arranged inside the box-like body (C) and said device (1) is configured to define, at least partially, a wall of said plurality of walls delimiting the second section (11b) so that the ends of the folded portions (3b) are arranged outside the box-like body (C); said first component (A) being placed in contact with a wall of the box-like body (C) delimiting at least one portion of the first section (11a).

2. The system according to claim 1, wherein the control unit modifies the electric power supplied to the heating device (1) as a function of a temperature of reference correlated to a temperature of the second component (B) of the electric traction unit.

3. The system according to claim 1 or 2, wherein the first section (11a) is arranged upstream of the second section (11b) with respect to a flow direction of the heat-transfer fluid inside the adjustment circuit (11).

4. The system according to any of the preceding claims, wherein said central body (3a) has a main extension axis parallel to the plate (2).

5. The system according to any of the preceding claims, wherein the resistor (3) comprises a pair of electrical connection terminals (3c) arranged at corresponding ends of the folded portions (3b).

6. The system according to claim 5, comprising at least one terminal block coupled to the first face (2a) of the plate (2) from which said electrical connection terminals (3c) project.

7. The system according to any of the preceding claims, wherein the central body (3a) is arranged inside the plate (2).

8. The system according to any one of the preceding claims, wherein the folded portions (3b) are inserted through the plate (2) so as to distance the corresponding knee points from the second face (2b).

9. The system according to any one of the preceding claims, wherein the plate (2) is made by means of co-moulding on the folded portions (3b) of the at least one resistor (3).

## Patentansprüche

1. Thermisches Einstellsystem für einen Elektromotor, umfassend:
einen Einstellkreislauf (11) mit einer ersten Sektion (11a) und einer zweiten Sektion (11b);
- ein Wärmeübertragungsfluid, das in dem Einstellkreislauf strömt;
- eine Heizvorrichtung (1), die an die zweite Sektion (11b) des Einstellkreislaufs (11) gekoppelt ist, um das im Gebrauch in der zweiten Sektion (11b) strömende Wärmeübertragungsfluid zu erwärmen; und umfassend:
- eine Platte (2) mit einer ersten Fläche (2a) und einer zweiten Fläche (2b), die einander gegenüberliegen;
- mindestens einen rohr- oder patronenförmigen Widerstand (3) mit einem Zentralkörper (3a), der sich zwischen zwei gefalteten Abschnitten (3b) erstreckt, die mittels entsprechender Kniestellen mit dem Zentralkörper (3a) verbunden sind, die entsprechende Enden aufweisen;
wobei die gefalteten Abschnitte (3b) so durch die Platte (2) eingeführt sind, dass sie den entsprechenden Enden an der ersten Fläche (2a) zugewandt sind;
- eine erste Komponente (A), die eine Leistungselektronik einer elektrischen Triebeinheit definiert und in einen Zustand des Wärmeaustauschs mit der ersten Sektion (11a) versetzt ist;
- eine zweite Komponente (B), die mindestens einen Batteriepack der elektrischen Triebeinheit umfasst, die in Fluidkommunikation mit der zweiten Sektion (11b) gebracht wird, um das Wärmeübertragungsfluid von der zweiten Sektion (11b) aufnehmen zu können;
- eine Steuereinheit, die betriebswirksam mit der Heizvorrichtung verbunden und ausgelegt ist, um eine elektrische Leistung zu modifizieren, die dem mindestens einen Widerstand (3) zugeführt wird, um eine Temperatur des Wärmeübertragungsfluids an der zweiten Sektion (11b) zu modifizieren;
- einen kastenförmigen Körper (C), der durch eine Vielzahl von Wänden begrenzt ist, wobei der Einstellkreislauf (11) innerhalb des kastenförmigen Körpers (C) angeordnet ist und die Vorrichtung (1) ausgelegt ist, um zumindest teilweise eine Wand der Vielzahl von Wänden zu definieren, die die zweite Sektion (11b) begrenzen, so dass die Enden der gefalteten Abschnitte (3b) außerhalb des kastenförmigen Körpers (C) angeordnet sind; wobei die erste Komponente (A) in Kontakt mit einer Wand des kastenförmigen Körpers (C) gebracht wird, die zumindest einen Abschnitt der ersten Sektion (11a) begrenzt.

2. System nach Anspruch 1, wobei die Steuereinheit die der Heizvorrichtung (1) zugeführte elektrische Leistung als Funktion einer Referenztemperatur modifiziert, die mit einer Temperatur der zweiten Komponente (B) der elektrischen Triebeinheit korreliert ist.

3. System nach Anspruch 1 oder 2, wobei die erste Sektion (11a) in Bezug auf eine Strömungsrichtung des Wärmeübertragungsfluids innerhalb des Einstellkreislaufs (11) stromaufwärts der zweiten Sektion (11b) angeordnet ist.

4. System nach einem der vorhergehenden Ansprüche, wobei der Zentralkörper (3a) eine Haupterstreckungsachse parallel zur Platte (2) aufweist.

5. System nach einem der vorhergehenden Ansprüche, wobei der Widerstand (3) ein Paar elektrischer Anschlussklemmen (3c) umfasst, die an entsprechenden Enden der gefalteten Abschnitte (3b) angeordnet sind.

6. System nach Anspruch 5, umfassend mindestens einen Klemmenblock, der an die erste Fläche (2a) der Platte (2) gekoppelt ist, von der die elektrischen Anschlussklemmen (3c) vorstehen.

7. System nach einem der vorhergehenden Ansprüche, wobei der Zentralkörper (3a) innerhalb der Platte (2) angeordnet ist.

8. System nach einem der vorhergehenden Ansprüche, wobei die gefalteten Abschnitte (3b) durch die Platte (2) eingeführt werden, um die entsprechenden Kniestellen von der zweiten Fläche (2b) zu distanzieren.

9. System nach einem der vorhergehenden Ansprüche, wobei die Platte (2) mittels Spritzgussgießens an den gefalteten Abschnitten (3b) des mindestens einen Widerstands (3) hergestellt ist.

## Revendications

1. Système de réglage thermique pour un moteur électrique, comprenant :
un circuit de réglage (11) comportant une première section (11a) et une seconde section (11b) ;
- un fluide caloporteur circulant dans ledit circuit de réglage ;
- un dispositif de chauffage (1) couplé à la seconde section (11b) du circuit de réglage (11) de manière à chauffer le fluide caloporteur, lors de l'utilisation, circulant dans ladite seconde section (11b) ; et comprenant :
- une plaque (2) comportant une première face (2a) et une seconde face (2b), qui sont opposées ;
- au moins une résistance (3) tubulaire ou de cartouche comportant un corps central (3a) s'étendant entre deux parties pliées (3b), qui sont reliées au corps central (3a) au moyen de points de coude correspondants, ayant des extrémités correspondantes ; lesdites parties pliées (3b) étant insérées à travers la plaque (2) de manière à faire face aux extrémités correspondantes au niveau de la première face (2a) ;
- un premier composant (A) définissant une électronique de puissance d'une unité de traction électrique et placé dans une condition d'échange thermique avec la première section (11a) ;
- un second composant (B), comprenant au moins un bloc-batterie de l'unité de traction électrique, étant placé en communication fluidique avec la seconde section (11b) de manière à pouvoir recevoir le fluide caloporteur provenant de ladite seconde section (11b) ;
- une unité de commande associée de manière fonctionnelle au dispositif de chauffage et configurée pour modifier une puissance électrique fournie à l'au moins une résistance (3) afin de modifier une température dudit fluide caloporteur au niveau de la seconde section (11b) ;
- un corps en forme de boîte (C) délimité par une pluralité de parois, dans lequel ledit circuit de réglage (11) est disposé à l'intérieur du corps en forme de boîte (C) et ledit dispositif (1) est configuré pour définir, au moins partiellement, une paroi de ladite pluralité de parois délimitant la seconde section (11b) de sorte que les extrémités des parties pliées (3b) soient disposées à l'extérieur du corps en forme de boîte (C) ; ledit premier composant (A) étant placé en contact avec une paroi du corps en forme de boîte (C) délimitant au moins une partie de la première section (1la).

2. Système selon la revendication 1, dans lequel l'unité de commande modifie la puissance électrique fournie au dispositif de chauffage (1) en fonction d'une température de référence corrélée à une température du second composant (B) de l'unité de traction électrique.

3. Système selon la revendication 1 ou 2, dans lequel la première section (11a) est disposée en amont de la seconde section (11b) par rapport à une direction d'écoulement du fluide caloporteur à l'intérieur du circuit de réglage (11).

4. Système selon l'une quelconque des revendications précédentes, dans lequel ledit corps central (3a) présente un axe d'extension principal parallèle à la plaque (2).

5. Système selon l'une quelconque des revendications précédentes, dans lequel la résistance (3) comprend une paire de bornes de connexion électrique (3c) disposées aux extrémités correspondantes des parties pliées (3b).

6. Système selon la revendication 5, comprenant au moins une plaque à bornes couplée à la première face (2a) de la plaque (2) à partir de laquelle lesdites bornes de connexion électrique (3c) font saillie.

7. Système selon l'une quelconque des revendications précédentes, dans lequel le corps central (3a) est disposé à l'intérieur de la plaque (2).

8. Système selon l'une quelconque des revendications précédentes, dans lequel les parties pliées (3b) sont insérées à travers la plaque (2) de manière à éloigner les points de coude correspondants de la seconde face (2b).

9. Système selon l'une quelconque des revendications précédentes, dans lequel la plaque (2) est réalisée par co-moulage sur les parties pliées (3b) de l'au moins une résistance (3) .
